# EUROPEAN PATENT APPLICATION

(11) **EP 2 554 239 A1**
(43) Date of publication of application: **06.02.2013**
(21) Application number: 11762429.6
(22) Date of filing: 25.02.2011
(51) Int. Cl.: B01D 53/04, B01D 53/44, B01D 53/81

(54) **ENERGIZING DEVICE AND ENERGIZING METHOD**

(30) Priority: 30.03.2010 JP 2010079563
(71) Applicant: Daikin Industries, Ltd., Osaka-shi, Osaka 530-8323 (JP)
(72) Inventor: YAMASHITA, Kiminari, Settsu-shi Osaka 566-8585 (JP); UTAKA, Yukihiro, Kusatsu-shi Shiga 525-8526 (JP); SAITOU, Aiko, Tama-shi Tokyo 206-0033 (JP); NAGANO, Yoshinobu, Tsukuba-shi Ibaraki 305-0031 (JP); KAMETANI, Keiichirou, Settsu-shi Osaka 566-8585 (JP)
(74) Representative: HOFFMANN EITLE
(86) International application number: PCT/JP2011/054317
(87) International publication number: WO 2011/122189

(57) **Abstract**

To provide a current passing device and a current passing method that can, even in a case where contact resistance in a case where bodies-through-which-current-is-passed have been brought into direct contact with each other is large, increase the current flowing through the bodies-through-which-current-is-passed. A current passing device (100) for passing current through bodies-through-which-current-is-passed includes: an adsorbent (11); electrodes (12) whose contact resistance in a state in which the electrodes (12) have been brought into direct contact with the adsorbent (11) without pressing the electrodes (12) is greater than at least the electrical resistance of the adsorbent (11) itself; screws (16) that press the adsorbent (11) and the electrodes (12) closer together; and carbon fibers (15) that are intervened between the adsorbent (11) and the electrodes (12), and whose degree of deformation in a case where the carbon fibers (15) have been pressed by the screws (16) is greater than the degrees of deformation of both the adsorbent (11) and the electrodes (12), and which are electrically conductive.

## Description

### TECHNICAL FIELD

The present invention relates to a current passing device and a current passing method.

### BACKGROUND ART

Conventionally, in a case where electricity is to be passed through bodies-through-which-current-is-passed, there has been the problem that a sufficient current cannot be passed because contact resistance at the interface of the bodies-through-which-current-is-passed is large.

As a technique for solving this problem, for example, as described in patent citation 1 (JP-A No. 2007-318132), a technique that reduces the contact resistance by adjusting the material components of the bodies-through-which-current-is-passed or annealing and surface-treating the surfaces of the bodies-through-which-current-is-passed has been proposed.

### SUMMARY OF INVENTION

### <Technical Problem>

However, there are cases where one does not want to change the material components of the bodies-through-which-current-is-passed, cases where changing the material components ends up incurring costs, or cases where there are materials on whose surfaces it is difficult to perform annealing and where reducing the contact resistance with these methods is undesired.

Further, there are also cases where the contact resistance can be reduced by a method that deposits a metal film on the surfaces of the bodies-through-which-current-is-passed, a method that welds a metal film on the surfaces of the bodies-through-which-current-is-passed, and a method that uses solder, but in all of these, there are cases where, depending on the properties of the surfaces of the bodies-through-which-current-is-passed, the contact resistance cannot be sufficiently reduced. There is also a method that uses an electrically conductive adhesive, but costs end up becoming higher.

The present invention has been made in view of the points described above, and it is a problem of the present invention to provide a current passing device and a current passing method that can, even in a case where contact resistance in a case where bodies-through-which-current-is-passed have been brought into direct contact with each other is large, increase the current flowing through the bodies-through-which-current-is-passed.

### <Solution to Problem>

A current passing device pertaining to a first aspect of the present invention is a current passing device for passing current through bodies-through-which-current-is-passed and includes a first current receiving element, a second current receiving element, pressing means, and an intervening member. The contact resistance of the second current receiving element in a state in which the second current receiving element has been brought into direct contact with the first current receiving element without pressing the second current receiving element is greater than at least the electrical resistance of the first current receiving element itself. The pressing means presses the first current receiving element and the second current receiving element closer together. The intervening member is intervened between the first current receiving element and the second current receiving element, the degree of deformation of the intervening member in a case where the intervening member has been pressed by the pressing means is greater than the degrees of deformation of both the first current receiving element and the second current receiving element, and the intervening member is electrically conductive.

The bodies-through-which-current-is-passed include semiconductors and conductors. Examples of materials for the bodies-through-which-current-is-passed include aluminum and aluminum alloys, carbon fiber, and electrically conductive ceramics such as silicon carbide and titanium nitride. Further, examples of forms of the bodies-through-which-current-is-passed include ceramic molded articles (e.g., honeycomb ceramic molded articles), products that have been made into cloth or felt by fiber (e.g., steel wool), and metal plates. Moreover, examples of uses of the bodies-through-which-current-is-passed include electrodes and adsorbents.

A current passing device pertaining to a second aspect of the present invention is the current passing device pertaining to the first aspect, wherein the first current receiving element and the second current receiving element are both rigid bodies.

A current passing device pertaining to a third aspect of the present invention is the current passing device pertaining to the first aspect or the second aspect, wherein the intervening member is in contact with both the first current receiving element and the second current receiving element.

A current passing device pertaining to a fourth aspect of the present invention is the current passing device pertaining to any of the first aspect to the third aspect, wherein the second current receiving element is an electrode formed by a metal that is a material differing from that of the first current receiving element.

A current passing device pertaining to a fifth aspect of the present invention is the current passing device pertaining to the fourth aspect, wherein the pressing means has a mechanism for pressing the electrode from the opposite side of the first current receiving element side to the first current receiving element side.

A current passing device pertaining to a sixth aspect of the present invention is the current passing device pertaining to the fifth aspect, wherein the degree to which the pressing means presses the electrode to the first current receiving element side is adjusted by adjusting the degree of fastening of a screw.

A current passing device pertaining to a seventh aspect of the present invention is the current passing device pertaining to any of the first aspect to the third aspect, wherein the first current receiving element and the second current receiving element are the same material. The first current receiving element and the second current receiving element may be the same material and have the same form.

A current passing device pertaining to an eighth aspect of the present invention is the current passing device pertaining to any of the first aspect to the seventh aspect, wherein the first current receiving element is an adsorbent.

A current passing device pertaining to a ninth aspect of the present invention is the current passing device pertaining to the eighth aspect, wherein the first current receiving element includes as a main component a non-metal inorganic electrically conductive material.

A current passing device pertaining to a tenth aspect of the present invention is the current passing device pertaining to the eighth aspect or the ninth aspect, wherein the intervening member is carbon fiber or metal fiber that can adsorb the same adsorption target as that of the first current receiving element.

A current passing device pertaining to an eleventh aspect of the present invention is the current passing device pertaining to any of the eighth aspect to the tenth aspect and further includes a current passing unit that supplies electrical power for passing current through both the first current receiving element and the second current receiving element. The first current receiving element emits heat and desorbs its adsorption target as a result of current being passed through it by the current passing unit.

A current passing method pertaining to a twelfth aspect of the present invention is a current passing method for passing current through bodies-through-which-current-is-passed, the current passing method including: passing current, in a state in which an intervening member that is electrically conductive has been intervened between a first current receiving element and a second current receiving element whose contact resistance in a state in which the second current receiving element has been brought into direct contact with the first current receiving element without pressing the second current receiving element is greater than at least the electrical resistance of the first current receiving element itself, in a state in which the first current receiving element and the second current receiving element have been pressed closer together. The degree of deformation of the intervening member in a case where the intervening member has been pressed by a pressing means is greater than the degrees of deformation of both the first current receiving element and the second current receiving element.

A current passing method pertaining to a thirteenth aspect of the present invention is the current passing method pertaining to the twelfth aspect, wherein the first current receiving element and the second current receiving element are both rigid bodies.

### <Advantageous Effects of Invention>

According to the current passing device or the current passing method pertaining to the present invention, it becomes possible, even in a case where contact resistance in a case where bodies-through-which-current-is-passed have been brought into direct contact with each other is large, to increase the current flowing through the bodies-through-which-current-is-passed.

### BRIEF DESCRIPTION OF DRAWINGS

FIG. 1 is a schematic configuration diagram of a current passing device of embodiment 1 of the present invention;
FIG. 2 is a schematic configuration diagram showing a state, before fastening with screws, of an adsorption and regeneration unit;
FIG. 3 is a schematic configuration diagram showing a state, after fastening with the screws, of the adsorption and regeneration unit;
FIG. 4 is a schematic configuration diagram of a current passing device of embodiment 2 of the present invention; and
FIG. 5 is a schematic configuration diagram of a current passing device of embodiment 3 of the present invention.

### DESCRIPTION OF EMBODIMENTS

A current passing device of the present invention is equipped with a first current receiving element, a second current receiving element, an intervening member, and pressing means.

### (1) First current receiving element

The form of the first current receiving element is not particularly limited, and examples thereof include an electrically conductive honeycomb ceramic molded article. In the case of using a rigid body as the first current receiving element, the effects of the present invention can be remarkably obtained. Examples of the first current receiving element include a body that has less flexibility and less tenacity than metal.

As the first current receiving element, for example, a molded article of granular activated carbon is desired. It is preferred that the granular activated carbon have a grain diameter whose sieve roughness is equal to or less than 300 mesh.

In addition to activated carbon, other examples of the first current receiving element include barium titanate.

Using a molded article of activated carbon as the first current receiving element is preferred because it can be used as an adsorbent for organic solvents (VOC). Moreover, a molded article of activated carbon which, when it has been subjected to Joule heating, emits heat due to the electrical resistance of the activated carbon itself and desorbs the organic solvents it had adsorbed is desired. As for the components of the molded article of activated carbon from which organic solvents are desorbed by Joule heating in this way, when there is too much carbon, the electrical resistance is too low and it becomes difficult to emit heat, so it is preferred that the molded article include a zeolite or a material such as sand that becomes an aggregate. Additionally, it is preferred that the mass per unit volume of the first current receiving element that has adsorption ability be greater than that of the later-described intervening member from the standpoints of being able to increase the adsorption quantity and being able to suppress an increase in the size of the first current receiving element.

### (Honeycomb Adsorbent Molded Article)

As an example of the first current receiving element, a honeycomb adsorbent molded article will be described.

It is preferred that the honeycomb adsorbent molded article mainly include 10 to 80% by weight of activated carbon powder, 10 to 80% by weight of an insulating adsorbent powder (e.g., any one or a combination of zeolite powder, silica gel powder, or activated alumina powder), and 5 to 30 wt % by weight of a binder (any one or a combination of colloidal silica, colloidal alumina, soluble glass, sepiolite, or epoxy). As the binder here, an inorganic binder such as colloidal silica, colloidal alumina, glass frit, soluble glass, or sepiolite is preferred.

Adjusting the resistance value in a state in which a suitable level of electrical conductivity is ensured by making the blending quantity of the activated carbon powder greater than the blending quantity of the insulating adsorbent power is preferred.

The honeycomb adsorbent molded article can be obtained by known methods, but it can also, for example, be obtained by the following method. Namely, first, the activated carbon powder and the insulating adsorbent powder are mixed together. Next, the binder and a solvent (e.g., water or an organic solvent) are added to the mixed powder, and the mixed powder, the binder, and the solvent are kneaded together to prepare a kneaded product. Next, the kneaded product is extrusion-molded through a mold into a honeycomb. Thereafter, the honeycomb molded article is allowed to dry. Then, the honeycomb molded article after drying is baked in a furnace to obtain the intended honeycomb adsorbent molded article. The baking temperature during the baking is equal to or less than 550 °C and preferably equal to or less than 400 °C.

### (Adsorbent Foam Molded Article)

As another example of the first current receiving element, the first current receiving element may also be an adsorbent foam molded article having the same components as those of the honeycomb adsorbent molded article.

The adsorbent foam molded article can be obtained by known methods, but it can also, for example, be obtained by the following method. Namely, first, the activated carbon powder and the insulating adsorbent powder are mixed together. Next, the binder and a solvent (e.g., water or an organic solvent) are added to the mixed powder, and the mixed powder, the binder, and the solvent are kneaded together to prepare a kneaded product. Next, plastic beads such as foamed polystyrene are mixed into the kneaded product to prepare a kneaded product including foam beads. Then, the kneaded product including foam beads is molded into a desired form, and the molded article is allowed to dry. Then, the molded article after drying is baked in a furnace or the plastic beads are extracted by an organic solvent from the molded article, whereby the intended adsorbent foam molded article can be obtained.

### (2) Second current receiving element

The form of the second current receiving element is not particularly limited, but the second current receiving element has the property that its contact resistance in a state in which the second current receiving element has been brought into contact with the first current receiving element without pressing the second current receiving element is greater than at least the electrical resistance of the first current receiving element. Further, the second current receiving element may also have the property that its contact resistance in a state in which the second current receiving element has been brought into contact with the first current receiving element without pressing the second current receiving element is greater than the electrical resistance of the second current receiving element itself.

For this reason, as long as the second current receiving element satisfies the above condition, it may be the same material as that of the first current receiving element or a different material; in either case, it suffices for the relationship to be such that the contact resistance between the first current receiving element and the second current receiving element is greater than the electrical resistance of the first current receiving element.

The second current receiving element may, for example, be the same as the first current receiving element or may be an electrode of a plate-like member configured from metal or an alloy. Examples of materials for electrodes include aluminum.

In a case where the first current receiving element and the second current receiving element are both rigid bodies, particularly the contact resistance tends to become larger, so the contact resistance reducing effect of the present invention becomes excellent.

### (3) Intervening Member

The intervening member is an electrically conductive member placed in such a way as to be intervened between the first current receiving element and the second current receiving element. The intervening member has a flexibility whose degree of deformation is greater than the degrees of deformation of both the first current receiving element and the second current receiving element in a case where the first current receiving element and the second current receiving element have been pressed against each other in a state in which the intervening member has been intervened between the first current receiving element and the second current receiving element. By placing the intervening member whose degree of deformation is greater in this way between the first current receiving element and the second current receiving element, the contact resistance between the first current receiving element and the intervening member can be reduced, the contact resistance between the second current receiving element and the intervening member can also be reduced, the total of these contact resistances can be made smaller than the contact resistance in a state in which the first current receiving element and the second current receiving element have been brought into contact with each other, and current passage can be made excellent in regard to both the first current receiving element and the second current receiving element. Further, in this case, it is preferred that the intervening member be placed in contact with the surfaces of both the first current receiving element and the second current receiving element, and it is desirable that current be passed uniformly through the entire first current receiving element and the entire second current receiving element.

The form of the intervening member is not particularly limited, and examples thereof include forms such as fiber, felt, tape, foil, mesh, paper, and textile. Further, several of these may also be layered to configure the intervening member.

Examples of materials for the intervening member include carbon fiber and metal fiber. It is preferred that the diameter per fiber be on the order of microns. Further, it is desired that the material for the intervening member be a material on whose surface it is difficult for an oxide film or the like to be formed from the standpoint of preventing electrical conductivity from dropping.

It suffices as long as the intervening member is flexible and has a shape that is deformable, and in addition to the above, the intervening member may also, for example, be electrically conductive tape, aluminum foil, and metal mesh such as aluminum mesh. It is preferred that the intervening member have large malleability from the standpoint of being able to increase contact area.

It is necessary to place the intervening member equipped with the above-described flexibility and so forth at least on the interface of the first current receiving element and the interface of the second current receiving element, but a material that does not particularly have the above-described flexibility may also, as long as it is an electrically conductive material, be intervened in portions other than the interface of the first current receiving element and the interface of the second current receiving element. For example, another electrically conductive member may also be intervened between an intervening member placed in contact with the interface of the first current receiving element and an intervening member placed in contact with the interface of the second current receiving element.

Examples of the first current receiving element, the second current receiving element, and the intervening member have been described above, but according to the present invention, a certain effect of increasing the current flowing through the bodies-through-which-current-is-passed can be obtained regardless of the surface forms of the first current receiving element, the second current receiving element, and the intervening member.

### (4) Pressing Means

The pressing means presses the first current receiving element and the second current receiving element closer together and deforms the intervening member intervened between the first current receiving element and the second current receiving element.

The pressing means is not particularly limited as long as it has the above-described function, and cases where the pressing means presses by means of a spring or its self-weight are also included.

### (Embodiment 1)

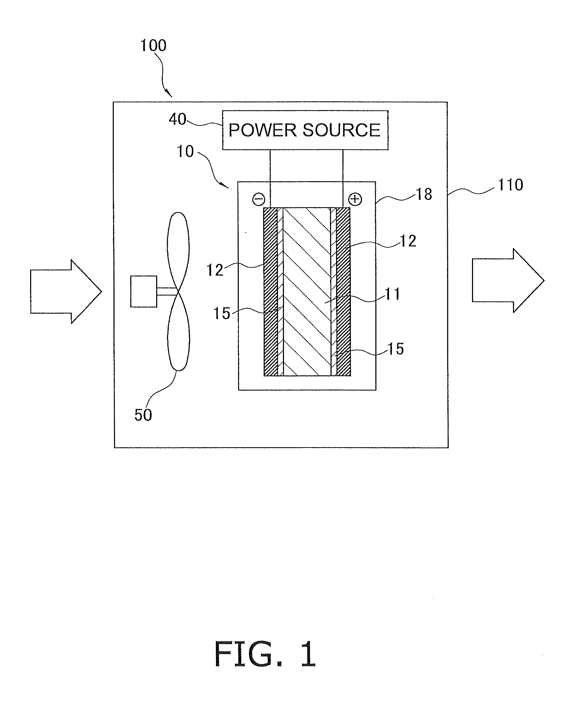

An example of the current passing device in which the first current receiving element, the second current receiving element, the intervening member, and the pressing means are employed will be described using FIGS. 1 to 3.

A current passing device 100 is a device that can repeatedly purify air by causing organic solvents and so forth to be adsorbed onto an adsorbent and using Joule heating to regenerate the adsorbent. The current passing device 100 mainly has a body casing 110, a blowing device 50, a power source 40, and an adsorption and regeneration unit 10.

An unillustrated air inlet and an unillustrated air outlet are disposed in the body casing 110, and air-to-undergo-treatment is taken in from the air inlet, is purified, and is thereafter blown out from the air outlet.

The blowing device 50 produces an airflow that guides and sends the air-to-undergo-treatment to the body casing 110.

The power source 40 can supply electrical power during the regeneration of the adsorption and regeneration unit 10 and is connected via lead wires to electrodes 12 of the adsorption and regeneration unit 10.

The adsorption and regeneration unit 10 is placed inside the casing 110 so as to be exposed to the passing air-to-undergo-treatment. The adsorption and regeneration unit 10 has an adsorbent 11 serving as a first current receiving element, electrodes 12 serving as second current receiving element, carbon fibers 15 serving as intervening members, an adsorption-use casing 18, and screws 16.

The adsorbent 11 is placed inside the adsorption-use casing 18, is generally formed by 40% activated carbon, 40% zeolite, and an inorganic binder as the remainder, and has an electrical resistance of 110 Ω. The value of the electrical resistance of the adsorbent 11 is smaller than the contact resistance between the adsorbent 11 and the electrodes 12.

The electrodes 12 are formed by aluminum and are placed on both ends of the adsorbent 11 inside the adsorption-use casing 18.

The carbon fibers 15 are placed between the adsorbent 11 and the electrodes 12 inside the adsorption-use casing 18.

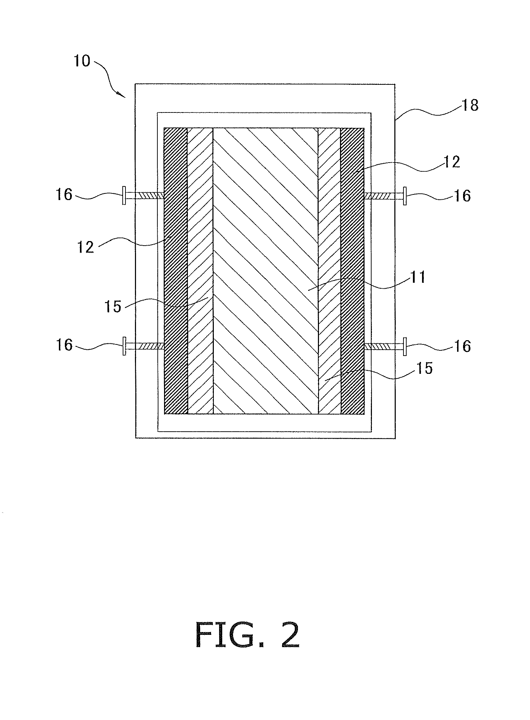

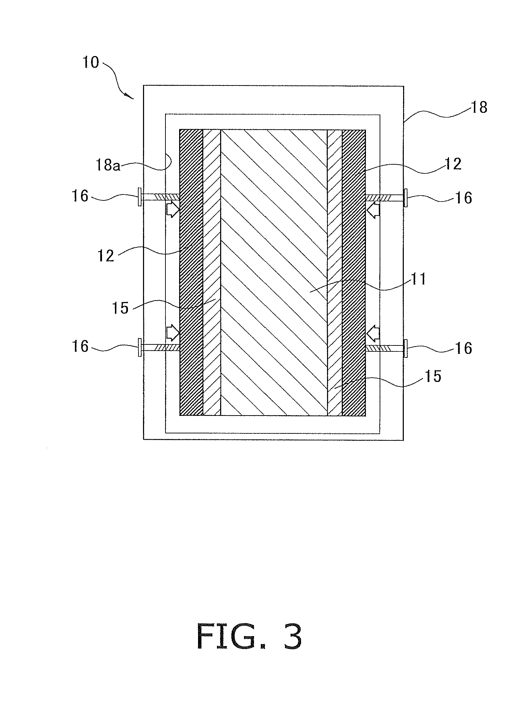

As shown in FIGS. 2 and 3, the screws 16 are screwed into unillustrated screw holes in the adsorption-use casing 18, and the distance between an inner surface 18a and the electrodes 12 can be adjusted by adjusting the degree to which the screws 16 are screwed in. Because of this, the extent to which the carbon fibers 15 are crushed in the thickness direction can be adjusted, so the contact resistance between the adsorbent 11 and the carbon fibers 15 and the contact resistance between the carbon fibers 15 and the electrodes 12 can be reduced without destroying the adsorbent 11. The screws 16 do not directly press the adsorbent 11 but act via the electrodes 12 and the carbon fibers 15, so the pressing force of the screws 16 can be suppressed from acting locally on the adsorbent 11 and ending up destroying the adsorbent 11.

The current passing device 100 causes adsorption components in the air-to-undergo-treatment to be adsorbed onto the adsorbent 11 and thereafter supplies electrical power from the power source 40 to the electrodes 12 so that current can be sufficiently passed through the adsorbent 11. Because of this, the adsorbent 11 emits heat due to its own electrical resistance and can desorb the adsorption components it had adsorbed, whereby the adsorbent 11 is regenerated.

### (Embodiment 2)

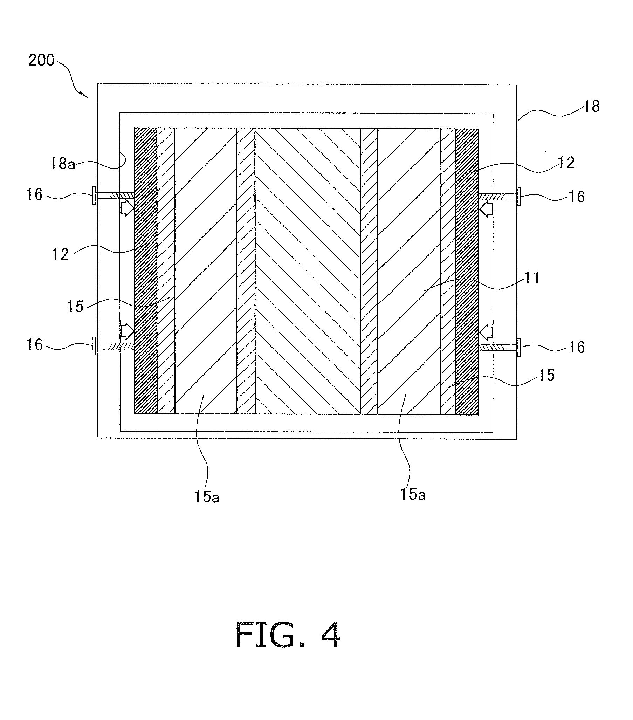

As shown in FIG. 4, a current passing device 200 of embodiment 2 is an example where parts of the central neighborhoods of the carbon fibers 15 of embodiment 1 are replaced by other electrically conductive members 15a. Other configurations are the same as those in embodiment 1. Embodiment 2 is particularly effective in a case where one wants to control the cost of the carbon fibers 15 and in the case of employing a material with better electrical conductivity than that of carbon fiber.

### (Embodiment 3)

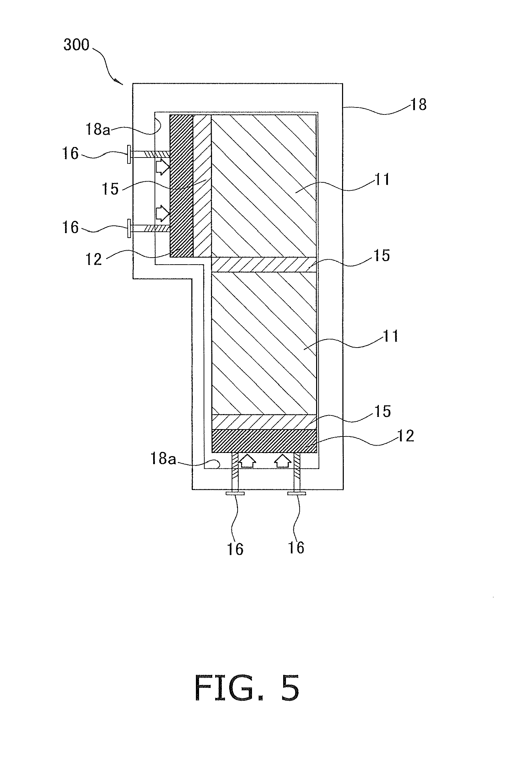

As shown in FIG. 5, a current passing device 300 of embodiment 3 uses a plurality of the adsorbents 11. Additionally, the carbon fibers 15 are placed between the adsorbents. Other configurations are the same as those in embodiment 1. By giving the current passing device this kind of configuration, contact resistance can be reduced and the degree of freedom of the placement of the electrodes 12 can be improved.

### INDUSTRIAL APPLICABILITY

The current passing device or the current passing method pertaining to the present invention is particularly useful in the case of reducing contact resistance between bodies-through-which-current-is-passed.

### REFERENCE SIGNS LIST

- 11: Adsorbent (First current receiving element)
- 12: Electrode (Second current receiving element)
- 15: Carbon Fiber (Intervening Member)
- 16: Screw (Pressing Means)
- 100: Current Passing Device

### CITATION LIST

### Patent Literature

Patent Citation 1: JP-A No. 2007-318132

## Claims

1. A current passing device for passing current through bodies-through-which-current-is-passed, the current passing device comprising:
a first current receiving element;
a second current receiving element whose contact resistance in a state in which the second current receiving element has been brought into direct contact with the first current receiving element without pressing the second current receiving element is greater than at least the electrical resistance of the first current receiving element itself;
pressing means that presses the first current receiving element and the second current receiving element closer together; and
an intervening member that is intervened between the first current receiving element and the second current receiving element, and whose degree of deformation in a case where the intervening member has been pressed by the pressing means is greater than the degrees of deformation of both the first current receiving element and the second current receiving element, and which is electrically conductive.

2. The current passing device according to claim 1, wherein the first current receiving element and the second current receiving element are both rigid bodies.

3. The current passing device according to claim 1 or 2, wherein the intervening member is in contact with both the first current receiving element and the second current receiving element.

4. The current passing device according to any one of claims 1 to 3, wherein the second current receiving element is an electrode formed by a metal that is a material differing from that of the first current receiving element.

5. The current passing device according to claim 4, wherein the pressing means has a mechanism for pressing the electrode from the opposite side of the first current receiving element side to the first body-through-which-current-is-passed side.

6. The current passing device according to claim 5, wherein the degree to which the pressing means presses the electrode to the first current receiving element side is adjusted by adjusting the degree of fastening of a screw.

7. The current passing device according to any one of claims 1 to 3, wherein the first current receiving element and the second current receiving element are the same material.

8. The current passing device according to any one of claims 1 to 7, wherein the first current receiving element is an adsorbent.

9. The current passing device according to claim 8, wherein the first current receiving element includes as a main component a non-metal inorganic electrically conductive material.

10. The current passing device according to claim 8 or 9, wherein the intervening member is carbon fiber or metal fiber that can adsorb the same adsorption target as that of the first current receiving element.

11. The current passing device according to any one of claims 8 to 10, further comprising a current passing unit that supplies electrical power for passing current through both the first current receiving element and the second current receiving element, wherein the first current receiving element emits heat and desorbs its adsorption target as a result of current being passed through it by the current passing unit.

12. A current passing method for passing current through bodies-through-which-current-is-passed, the current passing method comprising:
passing current, in a state in which an intervening member that is electrically conductive has been intervened between a first current receiving element and a second current receiving element whose contact resistance in a state in which the second current receiving element has been brought into direct contact with the first current receiving element without pressing the second current receiving element is greater than at least the electrical resistance of the first current receiving element itself, in a state in which the first current receiving element and the second current receiving element have been pressed closer together,
wherein the degree of deformation of the intervening member in a case where the intervening member has been pressed by a pressing means is greater than the degrees of deformation of both the first current receiving element and the second current receiving element.

13. The current passing method according to claim 12, wherein the first current receiving element and the second current receiving element are both rigid bodies.
